(19) Europäisches Patentamt
European Patent Office
Office européen des brevets

(11) Veröffentlichungsnummer: **0 162 806**
**B1**

# (12) EUROPÄISCHE PATENTSCHRIFT

(45) Veröffentlichungstag der Patentschrift: **25.01.89**

(51) Int. Cl.⁴: **C 09 B 29/20,** C 08 K 5/23

(21) Anmeldenummer: **85810175.1**

(22) Anmeldetag: **19.04.85**

(54) **Monoazoverbindungen enthaltend mindestens eine Carbonamidgruppe.**

(30) Priorität: **25.04.84 CH 2042/84**

(43) Veröffentlichungstag der Anmeldung:
**27.11.85 Patentblatt 85/48**

(45) Bekanntmachung des Hinweises auf die Patenterteilung:
**25.01.89 Patentblatt 89/4**

(84) Benannte Vertragsstaaten:
**CH DE FR GB IT LI**

(56) Entgegenhaltungen:
**DE-A-1 544 708**
**DE-B-1 153 841**
**GB-A-1 180 498**

**CHEMICAL ABSTRACTS, Band 95, Nr.16, Oktober 1981, Seite 77, Zusammenfassung 134377y, Columbus, Ohio, US; & CS-A- 186 132 (J. LUSTIG et al.) 15.11.1980**

**Die Akte enthält technische Angaben, die nach dem Eingang der Anmeldung eingereicht wurden und die nicht in dieser Patentschrift enthalten sind.**

(73) Patentinhaber: **CIBA- GEIGY AG, Klybeckstrasse 141, CH- 4002 Basel (CH)**

(72) Erfinder: **Hari, Stefan, Dr., Ch. de la Redoute 7, CH- 1752 Villars- sur- Glâne (CH)**

**EP 0 162 806 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1989

**Beschreibung**

Die Erfindung betrifft neue Monoazoverbindungen enthaltend mindestens eine Carbonamidgruppe, ein Verfahren zu deren Herstellung und ihre Verwendung zum Pigmentieren von hochmolekularem organischem Material.

Monoazoverbindungen enthaltend im Diazorest eine Carbonamidgruppe sind bekannt. Beispiele hierfür sind die Monoazoverbindungen aus 2,3-Hydroxynaphthoesäurearyliden, wie sie z. B. in der DE-Auslegeschrift Nr. 1 153 841 oder in der GB-Patentschrift Nr. 1 180 498 beschrieben sind.

Gegenstand der vorliegenden Erfindung sind Monoazoverbindungen der Formel I

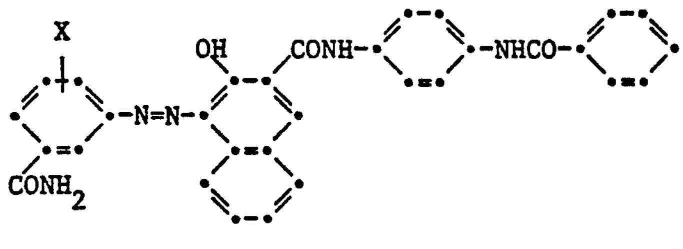

(I) ,

worin

X -H, $-CH_3$, $-CF_3$, - $NO_2$, $-COOR_1$, $-NHCOR_2$ oder $CONH_2$ bedeutet, $R_1$ für $C_1$-$C_4$-Alkyl und $R_2$ für $C_1$-$C_4$-Alkyl oder unsubstituiertes oder durch 1 bis 3 Halogenatome und/oder eine bis zwei Methyl- oder Methoxygruppen substituiertes Phenyl stehen.

Stellen $R_1$ und $R_2$ $C_1$-$C_4$-Alkyl dar, so handelt es sich dabei um eine Methyl-, Äthyl, n-Propyl-, Isopropyl-, n-Butyl-, Isobutyl- oder tert.-Butylgruppe. $R_1$ ist bevorzugt eine Methyl oder Äthylgruppe.

Ist Phenyl als $R_2$ durch Halogenatome substituiert, so handelt es sich dabei um Fluor-, Chlor-, Brom- und Jodatome, insbesondere aber um Chloratome.

Bevorzugt sind jene Verbindungen der Formel II

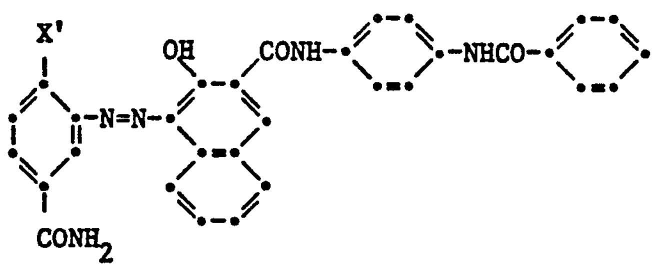

(II) ,

worin X' -H, $-CH_3$, $-CONH_2$, $-COOCH_3$ oder $COOC_2H_5$ darstellt.

Besonders bevorzugt sind jene Azoverbindungen der Formel II, worin X' -H oder $CH_3$ darstellt.

Die Monoazoverbindungen der Formeln I und II erhält man nach an sich bekannten Verfahren, beispielsweise durch Diazotierung eines Amins der Formel III

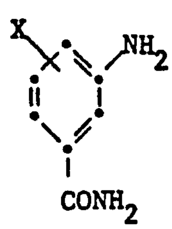

(III)

und Kupplung der erhaltenen Diazoverbindung mit 1-(2'-Hydroxy-3'-naphthoylamino)-4-benzoylamino-benzol.

Als Amine verwendet man vorzugsweise Aminobenzole der Formel IV

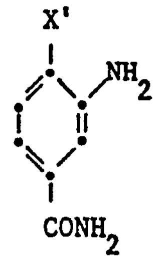

(IV) .

In den Formeln III und IV haben X und X' die oben angegebene Bedeutung.

Als Beispiele von Aminen der Formeln III und IV seien genannt:

3-Amino-benzamid, 3-Amino-4-acetylaminobenzamid, 3-Amino-4-carbo-äthoxy-benzamid, 3-Amino-4-carbomethoxybenzamid, 3-Amino-4-methyl-benzamid, 3-Amino-5-acetylamino-benzamid, 3-Amino-5-carbomethoxybenzamid, 3-Amino-5-nitrobenzamid, 3-Amino-5-trifluormethyl-benzamid, 3-Amino-6-benzoylamino-benzamid, 3-Amino-6-carboäthoxy-benzamid, 3-Amino-6-carbomethoxy-benzamid, 3-Amino-6-(2'-chlor-benzoylamino)-benzamid, 3-Amino-6-methyl-benzamid, 3-Amino-6-nitro-benzamid, 3-Aminophthalsäurediamid, 4-Aminophthalsäurediamid, 5-Aminoisophthalsäurediamid, 2-Aminoterephtalsäurediamid.

Die Kupplung der Diazoverbindung aus dem Amin der Formeln III oder IV mit dem 1-(2'-Hydroxy-3'-naphthoylamino)-4-benzoylamino-benzol als Kupplungskomponente findet vorzugsweise in schwach saurem Medium statt, zweckmässig in Gegenwart gebräuchlicher, die Kupplung fördernder Mittel.

Als solche seien insbesondere Dispergiermittel genannt, beispielsweise Aralkylsulfonate, wie Dodecylbenzolsulfonat, oder 1,1'-Dinaphthylmethan-2,2'-disulfonsäure oder Polykondensationsprodukte von Alkylenoxiden. Die Dispersion der Kupplungskomponente kann auch vorteilhaft Schutzkolloide, beispielsweise Methylcellulose oder kleinere Mengen inerter, in Wasser schwer löslicher oder unlöslicher organischer Lösungsmittel enthalten, beispielsweise gegebenenfalls halogenierte oder nitrierte aromatische Kohlenwasserstoffe, wie Benzol, Toluol, Xylol, Chlorbenzol, Dichlorbenzol oder Nitrobenzol, sowie aliphatische Halogenkohlenwasserstoffe, wie z. B. Tetrachlorkohlenstoff oder Trichloräthylen, ferner mit Wasser mischbare organische Lösungsmittel, wie Aceton, Methyläthylketon, Methanol, Äthanol oder Isopropanol.

Ferner kann die Kupplung auch so vollzogen werden, dass man das zu diazotierende Amin der Formeln III oder IV mit der Kupplungskomponente in einem organischen Lösungsmittel suspendiert und mit einem diazotierenden Mittel, insbesondere einem Ester der salpetrigen Säure, wie Methyl-, Äthyl-, Butyl-, Amyl- oder Octylnitrit, behandelt.

Schliesslich kann die Kupplung auch so vollzogen werden, dass man das Amin der Formeln III oder IV diazotiert und als Diazoaminoderivat zuerst isoliert und anschliessend dieses Aryldiazoaminoderivat mit der oben erwähnten Kupplungskomponente in einem inerten Lösungsmittel in Gegenwart einer Säure kuppelt, so wie es beispielsweise in der GB-PS-1 197 397 beschrieben ist. Bei Aminoterephthalsäurediamidderivaten können die bei der Diazotierung entstehenden Benztriazin-1,2,3-on-4-derivate mit der Kupplungskomponente gekuppelt werden, wie beispielsweise in der GB-PS-1 256 260 beschrieben.

Die erhaltenen Azoverbindungen fallen zumeist schon in der Hitze aus und können durch Abfiltrieren und gegebenenfalls durch Waschen mit organischen Lösungsmitteln in reiner Form isoliert werden.

Die erhaltenen Azoverbindungen der Formeln I und II können als Pigment zum Färben hochmolekularen organischen Materials verwendet werden, besitzen im allgemeinen eine gute Textur und können meistens als Rohprodukte verwendet werden. Falls nötig oder erwünscht, kann man die Rohprodukte durch Mahlen oder Kneten in eine feindisperse Form überführen. Dabei werden zweckmässig Mahlhilfsmittel, wie anorganische und/oder organische Salze in Gegenwart oder Abwesenheit organischer Lösungsmittel verwendet. Nach dem Mahlen werden Hilfsmittel wie üblich entfernt, lösliche anorganische Salze z. B. mit Wasser und wasserunlösliche organische Hilfsmittel beispielsweise durch Wasserdampfdestillation.

Auch durch Behandeln der rohen Azoverbindungen der Formeln I und II mit organischen Lösungsmitteln, vorzugsweise solchen, die über 100°C sieden, kann oft eine Verbesserung der Pigmenteigenschaften erreicht werden. Als besonders geeignet erweisen sich durch Halogenatome, Alkyl oder Nitrogruppen substituierte Benzole, wie Xylole, Chlorbenzol, o-Dichlorbenzol oder Nitrobenzol sowie Pyridinbasen, wie Pyridin, Picolin oder Chinolin, ferner Ketone, wie Cyclohexanon, Äther, wie Äthylenglykolmonomethyl- oder monoäthyläther, Amide, wie Dimethylformamid oder N-Methyl-pyrrolidon, sowie Dimethylsulfoxid, Sulfolan oder Wasser, gegebenenfalls unter Druck.

Man kann die Nachbehandlung auch in Wasser in Gegenwart von organischen Lösungsmitteln und/oder mit Zusatz von oberflächenaktiven Substanzen oder aliphatischen Aminen oder in flüssigem Ammoniak durchführen. Die Nachbehandlung erfolgt vorzugsweise durch Erhitzen der Azoverbindungen im Lösungsmittel auf 100 bis 150°C. Durch die oben erwähnten Nachbehandlungen lassen sich die erfindungsgemässen Azoverbindungen bezüglich ihrer Korngrösse und ihrer Pigmenteigenschaften wie Farbstärke, Migrations-, Licht- und Wetterbeständigkeit sowie Transparenz und Deckkraft steuern bzw. optimieren.

Je nach Verwendungszweck erweist es sich als vorteilhaft, die Azoverbindungen der Formeln I und II als

Toner oder in Form von Präparaten zu verwenden.

Das erfindungsgemäss zu färbende hochmolekulare organische Material kann natürlicher oder künstischer Herkunft sein. Es kann sich z. B. um Naturharze oder trocknende Öle, Kautschuk oder Casein oder um abgewandelte Naturstoffe, wie Chlorkautschuk, ölmodifizierte Alkydharze, Viscose, um Celluloseäther oder Ester, wie Celluloseacetat, Cellulosepropionat, Celluloseacetobutyrat oder Nitrocellulose handeln, insbesondere aber um vollsynthetische organische Polymere (Duroplaste und Thermoplaste), wie sie durch Polymerisation, Polykondensation oder Polyaddition erhalten werden. Aus der Klasse der Polymerisationsharze seien in erster Linie genannt: Polyolefine, wie Polyäthylen, Polypropylen oder Polyisobutylen, ferner substituierte Polyolefine, wie Polymerisate aus Vinylchlorid, Vinylacetat, Styrol, Acrylnitril, Acrylsäure- und/oder Methacrylsäureestern oder Butadien, sowie Copolymerisate der erwähnten Monomeren, insbesondere ABS oder EVA.

Aus der Reihe der Polyadditions- und Polykondensationsharze seien die Kondensationsprodukte von Formaldehyd mit Phenolen, die sogenannten Phenoplaste, und die Kondensationsprodukte von Formaldehyd mit Harnstoff, Thioharnstoff und Melamin, die sogenannten Aminoplaste, die als Lackharze verwendeten Polyester, und zwar sowohl gesättigte, wie z. B. Alkydharze, als auch ungesättigte, wie beispielsweise Maleinatharze, ferner die linearen Polyester und Polyamide oder Silikone genannt.

Die erwähnten hochmolekularen organischen Verbindungen können einzeln oder in Gemischen, als plastische Massen oder Schmelzen, die gegebenenfalls zu Fasern versponnen werden können, vorliegen.

Sie können auch in Form ihrer Monomeren oder im polymerisierten Zustand in gelöster Form als Filmbildner oder Bindemittel für Lacke oder Druckfarben vorliegen, wie z. B. Leinölfirnis, Nitrocellulose, Alkydharze, Melaminharze und Harnstoff-Formaldehydharze oder Acrylharze.

Die Pigmentierung der hochmolekularen, organischen Substanzen mit den Azoverbindungen der Formeln I und II erfolgt beispielsweise derart, dass man eine solche Azoverbindung gegebenenfalls in Form von Masterbatches, diesen Substraten unter Verwendung von Walzwerken, Misch oder Mahlapparaten zumischt. Das pigmentierte Material wird hierauf nach an sich bekannten Verfahren wie Kalandrieren, Pressen, Strangpressen, Streichen, Giessen oder durch Spritzguss in die gewünschte endgültige Form gebracht. Oft ist es erwünscht, zur Herstellung von nicht starren Formlingen oder zur Verringerung ihrer Sprödigkeit, den hochmolekularen Verbindungen vor der Verformung sogenannte Weichmacher einzuverleiben. Als solche können z. B. Ester der Phosphorsäure, Phthalsäure oder Sebacinsäure dienen. Die weichmacher können im erfindungsgemässen Verfahren vor oder nach der Einverleibung der Azoverbindung in die Polymeren eingearbeitet werden. Es ist ferner möglich, zwecks Erzielung verschiedener Farbtöne den hochmolekularen, organischen Stoffen neben den Azoverbindungen der Formeln I und II noch Füllstoffe bzw. andere farbgebende Bestandteile wie Weiss-, Bunt- oder Schwarzpigmente in beliebigen Mengen zuzufügen.

Zum Pigmentieren von Lacken und Druckfarben werden die hochmolekularen organischen Materialien und die Azoverbindungen der Formeln I und II gegebenenfalls zusammen mit Zusatzstoffen wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst und erst hierauf alle Komponenten zusammenbringt.

Die erhaltenen Färbungen enthalten vorzugsweise 0,01 - 20 Gew.-% einer Azoverbindung der Formel I, beispielsweise in Kunststoffen, Fasern, Lacken und Drucken, und zeichnen sich durch gute Farbstärke, hohe Sättigung, gute Dispergierbarkeit, Überlackier-, Migrations-, Hitze-, Licht- und Wetterechtheit sowie durch einen guten Glanz aus.

In den nachfolgenden Beispielen bedeuten die Teile, sofern nichts anderes angegeben wird, Gewichtsteile, die Prozente Gewichtsprozente, und die Temperaturen sind in Celsiusgraden angegeben.

**Beispiel 1:**

3 Teile 3-Amino-4-methyl-benzamid werden in 60 Vol.-Teilen Eisessig bei Raumtemperatur gelöst. Die so erhaltene hellbraune Lösung wird mit 5,45 Vol.-Teilen konzentrierter Salzsäure verrührt, die entstandene Suspension (Chlorhydrat) mit 10 Teilen Wasser verdünnt, auf 5° abgekühlt, während 15 Minuten und bei 5° mit 5,4 Vol.-Teilen 4N-Natriumnitritlösung tropfenweise versetzt und die erhaltene hellgelbe Diazolösung klärfiltriert.

7,65 Teile 4-Benzoylamino-(2'-hydroxy-3'-naphthoylamino)-benzol werden in 70 Teilen Wasser, 60 Vol.-Teilen Äthylalkohol und 4 Vol.-Teilen 30 %-iger wässeriger Natronlauge bei 40° gelöst. Die erhaltene Lösung wird klärfiltriert, auf 8° abgekühlt und bei dieser Temperatur tropfenweise innert 10 Minuten mit der oben hergestellten Diazolösung versetzt, wobei der pH-Wert der entstehenden Suspension mit 27 Vol.-Teilen 30 %-iger wässeriger Natriumhydroxydlösung auf 5 eingestellt wird. Man rührt die so erhaltene Suspension zuerst während 4 Stunden, bis die Temperatur auf 20° angestiegen ist. Dann wird sie innert 1 Stunde auf 75° erwärmt und bei dieser Temperatur abfiltriert. Der Rückstand wird mit warmem Wasser salzfrei gewaschen und anschliessend im Vakuum bei 60° getrocknet. Man erhält 10,6 Teile (97 % d.Th.) eines roten Pulvers der Formel

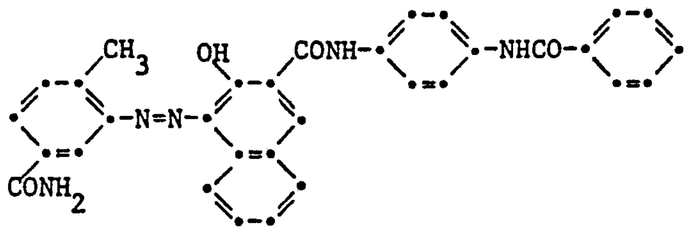

Das während 1 Stunde bei 147° in Dimethylformamid nachbehandelte Pigment erzeugt in weichem Polyvinylchlorid migrations-, licht- und wetterechte sowie farbstarke und brillante scharlachrote Färbungen.

In nachstehender Tabelle sind weitere erfindungsgemässe Azoverbindungen beschrieben, die durch Diazotierung des Amins der Kolonne I und anschliessende Kupplung der erhaltenen Diazoverbindung mit dem 4-Benzoylamino-1-(2'-hydroxy-3-naphthoylamino)-benzol erhalten werden. Kolonne II gibt den Farbton einer mit 0,2 % des erhaltenen Pigments gefärbten weichen PVC-Folie an.

**Tabelle**

| Beispiel Nr | I | II Farbton in Weich-PVC (0,2 % Pigment) |
|---|---|---|
| 2 | 3-Amino-benzamid | Rot |
| 3 | 2-Amino-terephthalsäurediamid | Rotorange |
| 4 | 5-Amino-isophthalsäurediamid | Rotorange |
| 5 | 3-Amino-4-äthoxycarbonyl-benzamid | Orange |
| 6 | 3-Amino-4-methoxycarbonyl-benzamid | Orange |
| 7 | 3-Amino-5-trifluormethyl-benzamid | Orange |
| 8 | 3-Amino-6-acetylamino-benzamid | Rot |
| 9 | 3-Amino-6-benzoylamino-benzamid | Karmin |
| 10 | 3-Amino-6-nitro-benzamid | Rotorange |

**Patentansprüche**

1. Azoverbindungen der Formel I

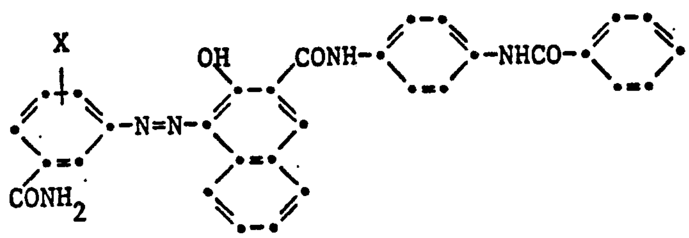

(I) ,

worin

X -H, $-CH_3$, $-CF_3$- $-NO_2$, $-COOR_1$, $-NHCOR_2$ oder $-CONH_2$ bedeutet und $R_1$ für $C_1$-$C_4$-Alkyl und $R_2$ für $C_1$-$C_4$-Alkyl oder unsubstituiertes oder durch 1 bis 3 Halogenatome und/oder eine bis zwei Methyl- oder Methoxygruppen substituiertes Phenyl stehen.

2. Azoverbindungen der Formel II

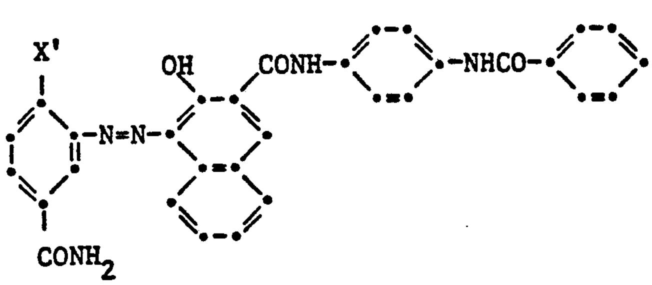

(II) ,

worin X' -H, $-CH_3$, ,$CONH_2$, $-COOCH_3$ oder $-COOC_2H_5$ darstellt.

3. Azoverbindungen der Formel II gemäss Anspruch 2, worin X' -H oder $-CH_3$ darstellt.

4. Verfahren zur Herstellung von Azoverbindungen gemäss Anspruch 1, dadurch gekennzeichnet, dass man ein Amin der Formel III

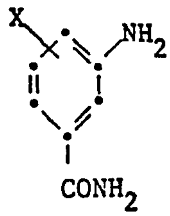

(III)

diazotiert und die erhaltene Diazoverbindung mit dem 1-(2'-Hydroxy-3'-naphthoylamino)-4-benzoylaminobenzol kuppelt, wobei X die im Anspruch 1 angegebene Bedeutung hat.

5. Verfahren zur Herstellung von Azoverbindungen gemäss Anspruch 4, dadurch gekennzeichnet, dass man ein Amin der Formel IV

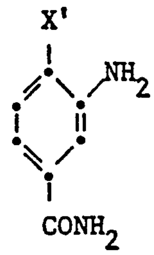

(IV)

verwendet, wobei X' die im Anspruch 2 angegebenen Bedeutung hat.

6. Verfahren zum Färben von hochmolekularem organischem Material, gekennzeichnet durch die Verwendung einer Azoverbindung der Formel I gemäss Anspruch 1.

7. Hochmolekulares organisches Material enthaltend eine Azoverbindung gemäss Anspruch 1.

**Claims**

1. An azo compound of the formula I

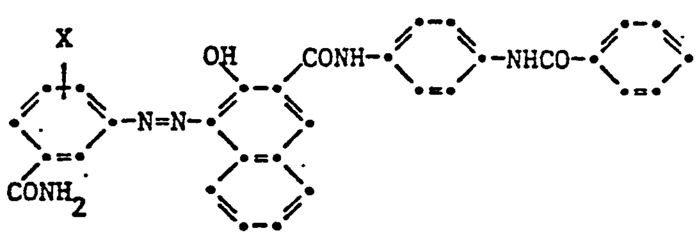

(I)

in which

X is -H, $-CO_3$, $-CF_3$, $NO_2$, $COOR_1$, $NHCOR_2$ or $-CONH_2$,

$R_1$ is $C_1$-$C_4$alkyl, and

$R_2$ is $C_1$-$C_4$alkyl, or phenyl which is unsubstituted or substituted by 1 to 3 halogen atoms and/or by one or two methyl or methoxy groups.

2. An azo compound of the formula II

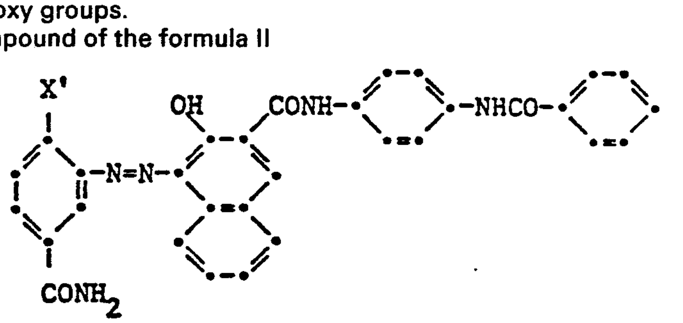

(II)

in which X' is -H, $-CH_3$, $-CONH_2$, $-COOCH_3$ or $-COOC_2H_5$.

3. An azo compound of the formula II according to claim 2, in which X' is -H or $-CH_3$.

4. A process for producing an azo compound according to claim 1, which process comprises diazotising an amine of the formula III

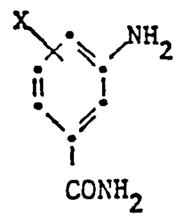

(III)

and coupling the resulting diazo compound with 1-(2'-hydroxy-3'-naphthoyl-amino)-4-benzoylaminobenzene, the symbol X having the meaning defined in claim 1.

5. A process for producing an azo compound according to claim 4, wherein there is used an amine of the formula IV

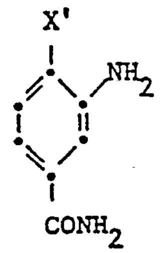

(IV)

in which X' has the meaning defined in claim 2.

6. A process for dyeing high molecular weight organic material, wherein an azo compound of the formula I according to claim 1 is used.

7. High molecular weight organic material containing an azo compound according to claim 1.

**Revendications**

1. Composés azoïques répondant à la formule I:

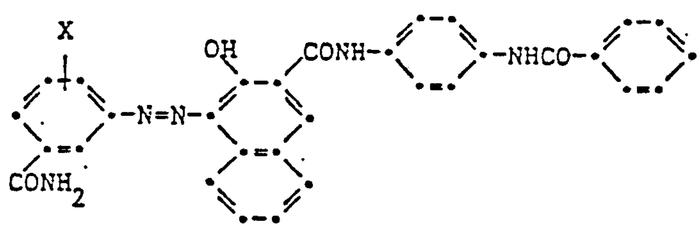

(I) .

dans laquelle X représente -H, $-CH_3$, $-CF_3$, $NO_2$, $-COOR_1$, $-NHCOR_2$ ou $-CONH_2$, le symbole $R_1$ désignant un alkyle en $C_1$-$C_4$ et le symbole $R_2$ un alkyle en $C_1$-$C_4$ ou un phényle non substitué ou porteur d'un à trois atomes d'halogènes et/ou d'un ou deux radicaux méthyles ou méthoxy.

2. Composés azoïques répondant à la formule II

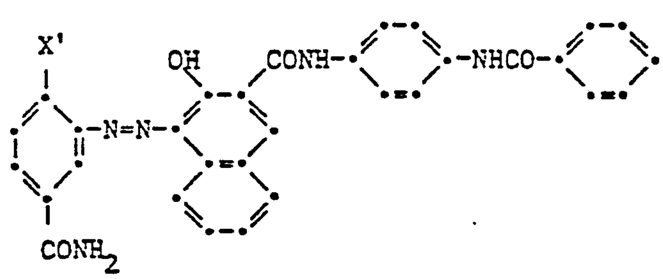

(II)

dans laquelle X' représente -H, $-CH_3$, $-CONH_2$, $-COOCH_3$ ou $-COOC_2H_5$.

3. Composés azoïques de formule II selon la revendication 2 dans lesquels X' représente -H ou $-CH_3$.

4. Procédé pour préparer des composés azoïques selon la revendication 1, procédé caractérisé en ce qu'on diazote une amine répondant à la formule III:

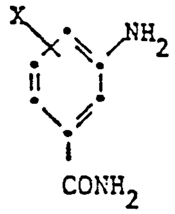

(III)

dans laquelle X a la signification qui lui a été donnée à la revendication 1, et on copule le diazoïque obtenu avec 1'(hydroxy-2 naphtoyl-3 amino)-1 benzoylamino-4 benzène.

5. Procédé pour préparer des composés azoïques selon la revendication 4, procédé caractérisé en ce qu'on utilise une amine répondant à la formule IV:

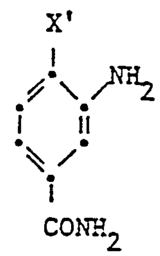

(IV)

dans laquelle X' a la signification qui lui a été donnée à la revendication 2.

6. Procédé pour colorer des matières organiques macromoléculaires, procédé caractérisé en ce qu'on utilise un composé azoïque de formule I selon la revendication 1.

7. Matières organiques macromoléculaires qui contiennent un composé azoïque selon la revendication 1.